# EUROPEAN PATENT SPECIFICATION

(11) **EP 4 394 917 B1**
(45) Date of publication and mention of the grant of the patent: **02.12.2026**
(21) Application number: 22878973.1
(22) Date of filing: 07.10.2022
(51) Int. Cl.: H01M 4/131, H01M 4/525, H01M 4/505, H01M 4/62, H01M 10/052, H01M 4/02, H01M 10/0525

(54) **POSITIVE ELECTRODE AND SECONDARY BATTERY COMPRISING SAME**
POSITIVE ELEKTRODE UND SEKUNDÄRBATTERIE DAMIT
ELECTRODE POSITIVE ET BATTERIE SECONDAIRE LA COMPRENANT

(30) Priority: 08.10.2021 KR 20210134107
(43) Date of publication of application: 03.07.2024
(73) Proprietor: LG Energy Solution, Ltd., Seoul 07335 (KR)
(72) Inventor: CHO, Woo Hyung, Daejeon 34122 (KR); HEO, Min Ji, Daejeon 34122 (KR); PARK, Sung Bin, Daejeon 34122 (KR)
(74) Representative: Hoffmann Eitle
(86) International application number: PCT/KR2022/015188
(87) International publication number: WO 2023/059152

(56) References cited:
- JP-A- 2018 107 007
- KR-A- 20060 112 823
- KR-A- 20120 030 774
- KR-A- 20170 111 746
- KR-A- 20190 139 033
- US-A1- 2015 221 943
- US-A1- 2021 005 875

## Description

### TECHNICAL FIELD

### Cross-reference to Related Applications

This application claims the benefit of Korean Patent Application No. 10-2021-0134107, filed on October 8, 2021, in the Korean Intellectual Property Office, the disclosure of which is incorporated herein in its entirety by reference.

### Technical Field

The present invention relates to a positive electrode and a secondary battery including the same.

### BACKGROUND ART

The rapid popularization of battery powered electronics such as mobile phones, notebook computers, and electric vehicles has brought with it a rapidly rising demand for small, lightweight and relatively higher capacity secondary batteries lately. Lithium secondary batteries in particular are highlighted as a driving power source for portable electronics because they are lightweight and have a high energy density.

Typically, lithium secondary batteries include a positive electrode, a negative electrode, a separator interposed between the positive electrode and the negative electrode, an electrolyte, an organic solvent, and the like. In addition, with respect to the positive electrode and the negative electrode, an active material layer including a positive electrode active material or a negative electrode active material may be formed on a collector. A lithium transition metal oxide is generally used as the positive electrode active material in the positive electrode, and accordingly, a carbon-based active material or silicon-based active material containing no lithium is used as the negative electrode active material in the negative electrode.

In this case, lithium cobalt oxide (LiCoO₂), lithium nickel oxide (LiNiO₂), lithium manganese oxide (LiMnO₂, LiMn₂O₄, and the like), lithium iron phosphate compound (LiFePO₄), and the like have been used as the lithium transition metal oxide. Among these materials, lithium cobalt oxide (LiCoO₂) has a high operating voltage and excellent capacity characteristics, and thus is widely used, and is applied as a positive electrode active material for high voltage. However, since there is a limitation in using a large amount of LiCoO₂ as a power source for applications, such as electric vehicles, due to the rising price and unstable supply of cobalt (Co), there has emerged a need to develop a positive electrode active material capable of replacing LiCoO₂.

Accordingly, a nickel cobalt manganese-based lithium composite transition metal oxide (hereinafter, simply referred to as 'NCM-based lithium composite transition metal oxide'), in which a portion of cobalt (Co) is substituted with nickel (Ni) and manganese (Mn), has been developed. The 'NCM-based lithium composite transition metal oxide' has faster charging speed than the lithium cobalt oxide, but has a larger specific surface area than lithium cobalt oxide to require a large amount of conductive material for conductivity, and accordingly making it hard to secure energy density of a positive electrode.

### [Related Art Document]

### [Patent Document]

Korean Patent Publication No. 10-2019-0042992, JP 2018 107007 A and US 2021/005875 A1

### DISCLOSURE OF THE INVENTION

### TECHNICAL PROBLEM

An aspect of the present invention provides a positive electrode having high energy density and excellent lifespan characteristics.

Another aspect of the present invention provides a secondary battery including the positive electrode described above.

### TECHNICAL SOLUTION

According to an aspect of the present invention, there is provided a positive electrode according to claim 1.

In addition, according to another aspect of the present invention, there is provided a secondary battery including the above-described positive electrode; a negative electrode facing the positive electrode; a separator disposed between the negative electrode and the positive electrode; and an electrolyte.

### ADVANTAGEOUS EFFECTS

According to a positive electrode according to the present invention, the positive electrode includes a positive electrode active material including a lithium composite transition metal oxide containing nickel, cobalt, and manganese, and a linear conductive material, the positive electrode active material satisfies a specific average particle diameter range, the lithium composite transition metal oxide is in the form of a single particle, and the positive electrode satisfies a specific equation for a BET specific surface area and an amount of the positive electrode active material and the linear conductive material in the positive electrode active material layer. The linear conductive material in the positive electrode active material layer is disposed between the positive electrode active materials to form a conductive network, and may thus prevent a decrease in life performance and an increase in resistance due to lack of conductivity. In addition, in the positive electrode satisfying the specific Equation 1, a decrease in energy density of the positive electrode due to excessive addition of a conductive material is prevented, and accordingly, the positive electrode of the present invention may have high energy density and improved life performance, and significantly reduce gas generation.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The term "average particle diameter (D₅₀)" as used herein may be defined as a particle diameter at a cumulative volume of 50% in a particle size distribution curve of particles. The average particle diameter (D₅₀), for example, may be measured by using a laser diffraction method. The laser diffraction method may generally measure a particle diameter ranging from a submicron level to a few mm and may obtain highly repeatable and high-resolution results.

A BET specific surface area herein may be determined, for example, through a measurement method of Brunauer-Emmett-Teller (BET) using BELSORP (BET instrument) from BEL JAPAN by using an adsorption gas such as nitrogen.

Hereinafter, the present invention will be described in detail.

### <Positive electrode>

The present invention relates to a positive electrode. Specifically, the positive electrode may be preferably used as a positive electrode for a lithium secondary battery.

To be specific, a positive electrode of the present invention includes a positive electrode current collector, and a positive electrode active material layer disposed on at least one surface of the positive electrode current collector, the positive electrode active material layer includes a positive electrode active material and a conductive material, the conductive material consistis of a linear conductive material, the positive electrode active material includes a lithium composite transition metal oxide containing nickel (Ni), cobalt (Co), and manganese (Mn), the lithium composite transition metal oxide is in the form of a single particle, the positive electrode active material has an average particle diameter (D₅₀) of 2 µm to 10 µm, and the positive electrode satisfies Equation 1 below. [Equation 1] $1.2 \leq B / A \leq 4.7$

In Equation 1 above, A is the product of BET specific surface area of positive electrode active material and percentage by weight of positive electrode active material relative to the weight of positive electrode active material layer, and B is the product of BET specific surface area of linear conductive material and percentage by weight of linear conductive material relative to the weight of positive electrode active material layer.

According to a positive electrode according to the present invention, the positive electrode includes a positive electrode active material including a lithium composite transition metal oxide containing nickel, cobalt, and manganese, and a linear conductive material, the positive electrode active material satisfies a specific average particle diameter range, the lithium composite transition metal oxide is in the form of a single particle, and the positive electrode satisfies a specific equation for a BET specific surface area and an amount of the positive electrode active material and the linear conductive material in the positive electrode active material layer. The linear conductive material in the positive electrode active material layer is disposed between the positive electrode active materials to form a conductive network, and may thus prevent a decrease in life performance and an increase in resistance due to lack of conductivity. In addition, in the positive electrode satisfying the specific Equation 1, a decrease in energy density of the positive electrode due to excessive addition of a conductive material is prevented, and accordingly, the positive electrode of the present invention may have high energy density and improved life performance, and significantly reduce gas generation.

### Positive electrode current collector

The positive electrode current collector is not particularly limited as long as it has conductivity without causing chemical changes in batteries. To be specific, the positive electrode current collector may include at least one selected from the group consisting of copper, stainless steel, aluminum, nickel, titanium, fired carbon, and an aluminumcadmium alloy, and may specifically include aluminum.

The positive electrode current collector may generally have a thickness of 3 µm to 500 µm.

The positive electrode current collector may have fine irregularities on a surface thereof to improve bonding strength of a positive electrode active material. For example, the positive electrode current collector may be used in various forms such as a film, a sheet, a foil, a net, a porous body, a foam body, and a non-woven fabric body.

### Positive electrode active material layer

The positive electrode active material layer is disposed on at least one surface of the positive electrode current collector. To be more specific, the positive electrode active material layer may be disposed on one surface or both surfaces of the positive electrode current collector.

The positive electrode active material layer may include a positive electrode active material and a conductive material.

The positive electrode active material layer includes a lithium composite transition metal oxide containing nickel (Ni), cobalt (Co), and manganese (Mn). Specifically, the positive electrode active material may be a lithium composite transition metal oxide.

A molar ratio (Li/M) of lithium to all metal elements (M) excluding lithium of the lithium composite transition metal oxide may be 0.98 to 1.05, specifically 1.0 to 1.04. When the molar ratio is within the above range, it is preferable in terms of improving capacity and preventing resistance increase due to an increase in lithium residue.

Specifically, the lithium composite transition metal oxide may include a composition represented by Formula 1 below.

[Formula 1] Li₁₊ₚ[Ni_{1-(x1+y1+z1)}Coₓ₁Mn_{y1}M^{a}_{z1}]₁₋ₚO₂

In Formula 1 above, M^{a} is at least one element selected from the group consisting of Al, Ti, Zr, Mg, Nb, Ba, Ca Ta, Sr, Zr, and Y, and -0.02≤p≤0.05, 0 < x1 < 1, 0 < y1 < 1, and 0≤z1≤0.1 are satisfied.

In the lithium composite transition metal oxide of Formula 1 above, Li may be included in an amount corresponding to 1+p, that is, 0.98≤1+p≤1.05, 1.0≤1+p≤1.04. When the above range is satisfied, it is preferable in terms of preventing decrease in capacity and preventing resistance increase due to an increase in lithium residue.

In the lithium composite transition metal oxide of Formula 1 above, Ni may be included in an amount corresponding to 1-(x1+y1+z1), for example, 0 <1-(x1+y1+z1) < 1. More preferably, Ni may be included in an amount of 0.5 ≤1-(x1+y1+z1) ≤ 0.95. When the above range is satisfied, high capacity may be achieved, and also excellent stability may be obtained.

In the lithium composite transition metal oxide of Formula 1 above, Co may be included in an amount corresponding to x1, that is, 0 < x1 < 1, specifically 0.1 ≤ x1 ≤0.4.

In the lithium composite transition metal oxide of Formula 1 above, Mn may be included in an amount corresponding to y1, that is, 0 < y1 < 1, specifically 0.1 ≤ y1 ≤0.4. When the above range is satisfied, it is preferable in terms of improving stability of the positive electrode active material, resulting in improved stability of batteries.

In the lithium composite transition metal oxide of Formula 1 above, M^{a} may be a doping element included in a crystal structure of the lithium composite transition metal oxide, and M^{a} may be included in an amount corresponding to z1, that is, 0≤z1≤0.1.

The lithium composite transition metal oxide or the positive electrode active material according to the present invention is in the form of a single particle. When the lithium composite transition metal oxide is in the form of a single particle, the lithium composite transition metal oxide has lower initial resistance and less particle breakage upon roll pressing than a lithium composite transition metal oxide in the form of secondary particles, but has a high resistance increase rate according to cycles. In this aspect, when the lithium composite transition metal oxide is in the form of a single particle, the positive electrode according to the present invention may secure conductivity, increase energy density, and improve lifespan characteristics as Equation 1 which will be described later is satisfied, and preferably prevent an increase in resistance according to cycles. When the lithium composite transition metal oxide or positive electrode active material is in the form of secondary particles, a specific surface area thereof is relatively large, and an electrolyte side reaction is excessive, so even when the above-described Equation 1 is satisfied, desired lifespan performance, improvement of rate characteristic, and prevention of gas generation are not achievable.

As used herein, "single particle" is formed of primary particles that are not in the form of secondary particles, and refers to a primary structure of a single particle. In addition, as used herein, "secondary particle" refers to an aggregate in which primary particles are aggregated by physical or chemical bonding between the primary particles without an intentional aggregation or assembly process of the primary particles constituting the secondary particle, that is, a secondary structure.

The positive electrode active material has an average particle diameter (D₅₀) of 2 µm to 10 µm. When the positive electrode active material has an average particle diameter (D₅₀) of less than 2 µm, a specific surface area thereof is relatively large, and an electrolyte side reaction is excessive, so even when the above-described Equation 1 is satisfied, lifespan performance, rate characteristic, and prevention of gas generation are not achievable. In addition, when the positive electrode active material has an average particle diameter (D₅₀) of greater than 10 µm, a lithium ion diffusion path extends due to the excessively large average particle diameter, so even when the above-described Equation 1 is satisfied, rate characteristic is significantly reduced, and improvement in life performance is not achievable.

The positive electrode active material may have an average particle diameter (D₅₀) of 3 µm to 8 µm, more specifically 3.5 µm to 6.0 µm. When the above range is satisfied, particle strength increases to prevent particle breakage upon roll pressing, improve roll pressing density, reduce specific surface area, and reduce lithium by-products, thereby reducing the amount of gas generated by side reactions with an electrolyte.

The positive electrode active material has a BET specific surface area of 0.2 m²/g to 3 m²/g, specifically 0.4 m²/g to 1 m²/g, and more specifically 0.7 m²/g to 1 m². When the above range is satisfied, it is preferable in terms of preventing gas generation due to side reactions on a surface of a positive electrode, and in particular, as Equation 1 which will be described later is satisfied, in the positive electrode, securing conductivity, increasing energy density, and improving lifespan characteristics may be more preferably achieved.

The positive electrode active material layer may include the positive electrode active material in an amount of 90 wt% to 99 wt%, specifically 92 wt% to 98 wt%. When the above range is satisfied, along with increased energy density, as Equation 1 which will be described later is satisfied, in the positive electrode, securing conductivity, increasing energy density, and improving lifespan characteristics may be more preferably achieved.

The conductive material may be used to support and improve conductivity of the positive electrode.

The conductive material includes a linear conductive material. The "linear conductive material" is a term used to distinguish the linear conductive material from conductive materials such as point-type, particle-type, and plate-type conductive materials. The linear conductive material is a long conductive material in fiber form, and may contribute to electrical contact between positive electrode active materials and forming a conductive network, and the conductive network forming through the linear conductive material may minimize the amount of a conductive material in a positive electrode, increase the amount of a positive electrode active material, and improve energy density of a positive electrode. In particular, according to the present invention, as Equation 1 which will be described later is satisfied, in the positive electrode, securing conductivity, increasing energy density, and improving lifespan characteristics may be more preferably achieved.

The linear conductive material may be at least one selected from conductive fibers and carbon nanotubes. More specifically, the linear conductive material may be carbon nanotubes. The conductive fibers may be carbon fibers, metal fibers, and the like, and the carbon nanotubes may be singlewalled carbon nanotubes, multi-walled carbon nanotubes, and the like. More specifically, the linear conductive material may be carbon nanotubes, and the carbon nanotubes are favorable in electrical contact between positive electrode active materials and forming a conductive network as having long fiber length, high graphitization degree and crystallinity.

The linear conductive material may have a BET specific surface area of 150 m²/g to 300 m²/g, specifically 170 m²/g to 210 m²/g, and when the above range is satisfied, it is preferable in terms of preventing gas generation through a specific surface area lowered to a desirable level, and as Equation 1 which will be described later is satisfied, in the positive electrode, securing conductivity, increasing energy density, and improving lifespan characteristics may be more preferably achieved.

A BET specific surface area of the linear conductive material may be 150 to 450 times, more specifically 180 to 300 times a BET specific surface area of the positive electrode active material, and in this case, it is preferable in terms of achieving battery capacity while securing sufficient conductivity.

The linear conductive material may have a pellet density of 0.09 g/cc to 0.16 g/cc, specifically 0.095 g/cc to 0.145 g/cc. When the above range is satisfied, it is preferable in terms of improving energy density by regulating roll pressing density of an electrode to a desired level.

Pellet density may indicate a density when 5 g of a linear conductive material is placed in a mold having a diameter of 22 mm and determined at a pressure of 2 tons using a powder resistance meter (device name: HPRM-A2, manufacturer: HANTECH).

The linear conductive material may have an average length of 1 µm to 100 µm, specifically 5 µm to 30 µm. When the above range is satisfied, it is preferable in terms of keeping a conductive network between active materials well.

An average length of the linear conductive material herein is determined in the following manner. A solution in which a linear conductive material and carboxymethylcellulose (CMC) are added to water in a weight ratio of 40:60 (solid content is 1 wt% with respect to a total weight of the solution) is diluted 1,000 times with water. Thereafter, 20 ml of the diluted solution is filtered through a filter, and the filter through which the linear conductive material is filtered is dried. 100 images of the dried filter are taken using a scanning electron microscope (SEM), length of the linear conductive material is determined using an imageJ program, and an average value of the lengths is defined as an average length of the linear conductive material.

The linear conductive material may have an average diameter of 5 µm to 30 µm, specifically 10 µm to 20 µm. When the average diameter of the linear conductive material is within the above range, it is preferable in terms of preventing breakage of the linear conductive material and ensuring flexibility.

An average diameter of the linear conductive material herein is determined in the following manner. A solution in which a linear conductive material and carboxymethylcellulose (CMC) are added to water in a weight ratio of 40:60 (solid content is 1 wt% with respect to a total weight of the solution) is diluted 1,000 times with water. One drop of the diluted solution is applied to TEM grid, and the TEM grid is dried. The dried TEM grid is observed using TEM instrument (product name: H7650, manufacturer: Hitachi) to determine the average diameter of the linear conductive material.

The positive electrode active material layer includes the linear conductive material in an amount of 0.50 wt% to 1.75 wt%, specifically 0.8 wt% to 1.7 wt%, and more specifically 1.0 wt% to 1.5 wt%. When the above range is satisfied, conductivity of a positive electrode is secured to a desirable level, and also aggregation of the linear conductive material due to excessive addition of the linear conductive material and the consequent formation of an uneven conductive network in the positive electrode are prevented, and the amount of the positive electrode active material increases to improve energy density of the positive electrode.

The percentage by weight of the linear conductive material relative to a total weight of the positive electrode active material layer is 0.006 times to 0.019 times, specifically 0.013 times to 0.018 times, more specifically 0.014 times to 0.017 times the percentage by weight of the positive electrode active material relative to a total weight of the positive electrode active material layer. When the above range is satisfied, as Equation 1 which will be described later is satisfied, in the positive electrode, securing conductivity, increasing energy density, and improving lifespan characteristics may be more preferably achieved.

In an example, not forming part of the claimed invention, the conductive material may further include a point-type conductive material along with the linear conductive material. The point-type conductive material may refer to, for example, a particulate conductive material. Specifically, the point-type conductive material may include at least one selected from the group consisting of: graphite such as natural graphite and artificial graphite; carbon black such as acetylene black, Ketjen black, channel black, furnace black, lamp black, and thermal black; fluorocarbon; metal powder such as aluminum powder and nickel powder; conductive whisker such as zinc oxide and potassium titanate; conductive metal oxide such as titanium oxide; and polyphenylene derivatives.

According to the claimed invention, the conductive material may be formed of a linear conductive material. For example, the conductive material does not include a point-type conductive material but include a linear conductive material alone. According to the present invention, as Equation 1 above is satisfied, excellent conductivity and improvement of lifespan performance may be achieved, but when both a linear conductive material and a point-type conductive material are included, a uniform conductive network may be hardly achieved according to addition of the point-type conductive material or the amount of a positive electrode active material may be reduced, and accordingly energy density may not be sufficiently improved.

The positive electrode active material layer may further include a binder.

The binder is a component that supports binding of an active material and a conductive material and binding to a collector, and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), sulfonated EPDM, styrene-butadiene rubber, and fluorine rubber, and may be more preferably polyvinylidene fluoride.

The binder may be included in an amount of 0.1 wt% to 10 wt%, preferably 0.1 wt% to 3 wt%, and more specifically 0.5 wt% to 2.5 wt% in a positive electrode active material layer to sufficiently secure binding force between components such as positive electrode active materials.

When the positive electrode active material layer further includes a binder, the positive electrode active material layer may include the binder in a remaining amount excluding the positive electrode active material and the linear conductive material.

The positive electrode active material layer may further include a thickener.

The thickener is used for smooth dispersion of active materials, conductive materials, binders, and the like, and is not particularly limited as long as it is used in the art. For example, the thickener may be carboxymethylcellulose. The positive electrode active material layer may include the thickener in an amount of 0.1 wt% to 10 wt%, preferably 0.1 wt% to 3 wt%.

When the positive electrode active material layer further includes the thickener, the positive electrode active material layer may include the thickener in a remaining amount excluding the positive electrode active material and the linear conductive material. Specifically, when the positive electrode active material layer further includes the binder and the thickener, the positive electrode active material layer may include the binder and the thickener in a remaining amount excluding the positive electrode active material and the linear conductive material.

In the present invention, the positive electrode satisfies Equation 1 below. [Equation 1] $1.2 \leq B / A \leq 4.7$

In Equation 1 above, A is the product of BET specific surface area of positive electrode active material and percentage by weight of positive electrode active material relative to the weight of positive electrode active material layer, and B is the product of BET specific surface area of linear conductive material and percentage by weight of linear conductive material relative to the weight of positive electrode active material layer.

According to Equation 1, the relationship between the specific surface area and the amount of a positive electrode active material and a conductive material may be optimally regulated in terms of improving conductivity, energy density, and lifespan performance of a positive electrode. When B/A is less than 1.2, too little conductive material is included, resulting in reduced conductivity or insufficient electrical contact between positive electrode active materials to increase resistance of a positive electrode and significantly deteriorate cycle characteristics. In addition, when B/A is greater than 4.7, the conductive material is added in an excessive amount, resulting in a decrease in energy density due to a reduced amount of the positive electrode active material, and a uniform conductive network may be hardly formed in the positive electrode due to aggregation of the linear conductive material.

In Equation 1 above, the B/A may be specifically 1.8 to 4.2, more specifically 2.7 to 4.2, and even more specifically 3.2 to 3.7, and when the above range is satisfied, in the positive electrode, effects of securing conductivity and improving lifespan characteristics may be greater.

In Equation 1 above, the positive electrode active material and the linear conductive material have the same units of percentage by weight and BET specific surface area. For example, the unit of percentage by weight of the positive electrode active material layer and the linear conductive material in Equation 1 is "wt%" with respect to weight of the positive electrode active material, and the unit of BET specific surface area of the positive electrode active material and the linear conductive material in Equation 1 may be "m²/g".

The positive electrode may be prepared according to a typical method of preparing a positive electrode except for being prepared to satisfy Equation 1 according to the present invention. For example, the positive electrode may be prepared by dissolving or dispersing components constituting a positive electrode active material layer, such as a positive electrode active material, a conductive material, a binder, and the like in a solvent to prepare a positive electrode slurry, applying the positive electrode slurry onto at least one surface of a positive electrode current collector, followed by drying and roll pressing, or may be prepared by casting the positive electrode slurry on a separate support and then laminating a film separated from the support on the positive electrode current collector.

### <Secondary battery>

In addition, the present invention provides a secondary battery including the positive electrode described above.

Specifically, a secondary battery according to the present invention includes the above-described positive electrode, a negative electrode facing the positive electrode, a separator disposed between the positive electrode and the negative electrode, and an electrolyte.

Descriptions of the positive electrode has been given above.

The negative electrode may face the positive electrode.

The negative electrode may include a negative electrode current collector and a negative electrode active material layer disposed on at least one surface of the negative electrode current collector.

The negative electrode current collector is not particularly limited as long as it has conductivity without causing chemical changes in batteries. To be specific, the negative electrode current collector may include at least one selected from the group consisting of copper, stainless steel, aluminum, nickel, titanium, fired carbon, and an aluminumcadmium alloy, and may specifically include copper.

The negative electrode current collector may generally have a thickness of 3 µm to 500 µm.

The negative electrode current collector may have fine irregularities on a surface thereof to improve bonding strength of a negative electrode active material. For example, the negative electrode current collector may be used in various forms such as a film, a sheet, a foil, a net, a porous body, a foam body, and a non-woven fabric body.

The negative electrode active material layer is disposed on at least one surface of the negative electrode current collector. Specifically, the negative electrode active material layer may be disposed on one surface or both surfaces of the negative electrode current collector.

The negative electrode active material layer may include a negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiOᵥ (0<v<2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. Furthermore, low crystalline carbon, high crystalline carbon and the like may all be used as a carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and hightemperature sintered carbon such as petroleum or coal tar pitch derived cokes.

The negative electrode active material layer may further include a negative electrode binder, a negative electrode conductive material, and/or a thickener in addition to the above-described negative electrode active material.

The binder is a component that assists in binding between an active material and/or a collector, and may generally be included in an amount of 1 wt% to 30 wt%, preferably 1 wt% to 10 wt% in a negative electrode active material layer.

The negative electrode binder may include at least one selected from the group consisting of polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber, and fluorine rubber, preferably, at least one selected from polyvinylidene fluoride and styrene-butadiene rubber.

Any thickener used in typical lithium secondary batteries may be used as the thickener, and an example thereof is carboxymethyl cellulose (CMC).

The negative electrode conductive material is a component for further improving conductivity of a negative electrode active material, and may be included in an amount of 1 wt% to 30 wt%, preferably 1 wt% to 10 wt% in a negative electrode active material layer.

The negative electrode conductive material is not particularly limited as long as it has conductivity without causing chemical changes in batteries, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like may be used. Specific examples of a commercially available conductive material may include acetylene black series such as products manufactured by Chevron Chemical Company or Denka black manufactured by Denka Singapore private limited, products manufactured by Gulf Oil Company, Ketjen black, EC series manufactured by Armak Company, Vulcan XC-72 manufactured by Cabot Company, and Super P manufactured by Timcal Company.

The negative electrode may be prepared according to a typical method of preparing a negative electrode, which is generally known in the art. For example, the negative electrode may be prepared by dissolving or dispersing components constituting a negative electrode active material layer, such as a negative electrode active material, a conductive material, a binder, and the like in a solvent to prepare a negative electrode slurry, applying the negative electrode slurry onto at least one surface of a negative electrode current collector, followed by drying and roll pressing, or may be prepared by casting the negative electrode slurry on a separate support and then laminating a film separated from the support on the negative electrode current collector.

Meanwhile, in the secondary battery, a separator is to separate the negative electrode and the positive electrode and to provide a movement path for lithium ions. Any separator may be used without particular limitation as long as it is typically used as a separator in a secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may be selectively used in a singlelayered or a multi-layered structure.

Meanwhile, the electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as Ra-CN (where Ra is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, performance of the electrolyte may be excellent when the cyclic carbonate and the chain carbonate are mixed in a volume ratio of about 1:1 to about 1:9.

The lithium salt may be used without particular limitation as long as it is a compound capable of providing lithium ions used in lithium secondary batteries. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

A secondary battery including the positive electrode active material according to the present invention as described above has excellent electrical properties and high temperature storage properties, and may thus be usefully applied to portable devices such as a mobile phone, a laptop computer, and a digital camera, and in electric cars such as a hybrid electric vehicle (HEV). In particular, the secondary battery according to the present invention may be usefully used as a high voltage battery having a voltage of greater than 4.45 V.

In addition, the secondary battery according to the present invention may be used as a unit cell of a battery module, and the battery module may be applied to a battery pack. The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

Hereinafter, examples of the present invention will be described in detail in such a manner that it may easily be performed by a person with ordinary skill in the art to which the present invention pertains. The invention may, however, be embodied in many different forms and should not be construed as being limited to the examples set forth herein.

### Examples and Comparative Examples

### Example 1: Preparation of positive electrode

As a positive electrode active material, a lithium composite transition metal oxide in the form of a single particle and represented by Formula of Li[Ni_{0.83}Co_{0.11}Mn_{0.06}]O₂ was prepared. The positive electrode active material had a BET specific surface area of 0.8 m²/g and an average particle diameter (D₅₀) of 4.4 µm.

Carbon nanotubes were prepared as a linear conductive material. The carbon nanotubes had a BET specific surface area of 185 m²/g, and a pellet density of 0.12 g/cc.

The positive electrode active material, the linear conductive material, PVdF as a binder, and carboxymethylcellulose (CMC) as a thickener were mixed in a weight ratio of 97.00: 0.68: 1.20: 1.12 in an N-methylpyrrolidone solvent to prepare a positive electrode slurry, and the positive electrode slurry was then applied onto an aluminum collector, dried, and roll pressed to prepare a positive electrode of Example 1.

### Example 2: Preparation of positive electrode

A positive electrode was prepared in the same manner as in Example 1, except that the positive electrode active material, the linear conductive material, the binder, and the thickener used in Example 1 were mixed in a weight ratio of 97.00: 1.47: 1.20: 0.33.

### Example 3: Preparation of positive electrode

A positive electrode was prepared in the same manner as in Example 1, except that the positive electrode active material, the linear conductive material, the binder, and the thickener used in Example 1 were mixed in a weight ratio of 97.00: 1.68: 1.20: 0.12.

### Example 4 not part of the claimed invention : Preparation of positive electrode

A positive electrode was prepared in the same manner as in Example 1, except that the positive electrode active material, the linear conductive material, the binder, the thickener, and carbon black(BET specific surface area: 135 m²/g) as a point-type conductive material used in Example 1 were mixed in a weight ratio of 97.0:1.1:1.2:0.2:0.5.

### Example 5 not part of the claimed invention : Preparation of positive electrode

A positive electrode was prepared in the same manner as in Example 1, except that the positive electrode active material, the linear conductive material, the binder, the thickener, and carbon black(BET specific surface area: 135 m²/g) as a point-type conductive material used in Example 1 were mixed in a weight ratio of 97.00:0.75:1.20:0.05:1.00.

### Comparative Example 1: Preparation of positive electrode

A positive electrode was prepared in the same manner as in Example 1, except that the positive electrode active material, the linear conductive material, the binder, and the thickener used in Example 1 were mixed in a weight ratio of 97.00: 0.42: 1.20: 1.38.

### Comparative Example 2: Preparation of positive electrode

A positive electrode was prepared in the same manner as in Example 1, except that the positive electrode active material, the linear conductive material, the binder, and the thickener used in Example 1 were mixed in a weight ratio of 97.00: 1.89: 1.00: 0.11.

### Comparative Example 3: Preparation of positive electrode

Unlike Example 1, a linear conductive material was not used in Comparative Example 3.

Specifically, A positive electrode was prepared in the same manner as in Example 1, except that the same positive electrode active material, binder, thickener used in Example 1, and carbon black (BET specific surface area: 135 m²/g) as a point-type conductive material were mixed in a weight ratio of 96.6:1.2:0.2:2.0.

### Comparative Example 4: Preparation of positive electrode

As a positive electrode active material, a lithium composite transition metal oxide in the form of a single particle and represented by Formula of Li[Ni₀₈₃Co_{0.11}Mn_{0.06}]O₂ was prepared. The positive electrode active material had a BET specific surface area of 1.8 m²/g and an average particle diameter (D₅₀) of 1.5 µm.

A positive electrode was prepared in the same manner as in Example 2, except that the positive electrode active material prepared above was used.

### Comparative Example 5: Preparation of positive electrode

As a positive electrode active material, a lithium composite transition metal oxide in the form of a single particle and represented by Formula of Li[Ni_{0.83}Co_{0.11}Mn_{0.06}]O₂ was prepared. The positive electrode active material had a BET specific surface area of 1.8 m²/g and an average particle diameter (D₅₀) of 1.5 µm.

A positive electrode was prepared in the same manner as in Example 1, except that the positive electrode active material prepared above was used, and the positive electrode active material, the linear conductive material, the binder, and the thickener were mixed in a weight ratio of 95.0: 3.0: 1.5: 0.5.

### Comparative Example 6: Preparation of positive electrode

As a positive electrode active material, a lithium composite transition metal oxide in the form of a single particle and represented by Formula of Li[Ni_{0.83}Co_{0.11}Mn_{0.06}]O₂ was prepared. The positive electrode active material had a BET specific surface area of 0.6 m²/g and an average particle diameter (D₅₀) of 12.0 µm.

A positive electrode was prepared in the same manner as in Example 2, except that the positive electrode active material prepared above was used.

### Comparative Example 7: Preparation of positive electrode

As a positive electrode active material, a lithium composite transition metal oxide in the form of a single particle and represented by Formula of Li[Ni_{0.83}Co_{0.11}Mn_{0.06}]O₂ was prepared. The positive electrode active material had a BET specific surface area of 0.6 m²/g and an average particle diameter (D₅₀) of 12.0 µm.

A positive electrode was prepared in the same manner as in Example 1, except that the positive electrode active material prepared above was used, and the positive electrode active material, the linear conductive material, the binder, and the thickener were mixed in a weight ratio of 96: 1: 2: 1.

### Comparative Example 8: Preparation of positive electrode

As a positive electrode active material, a lithium composite transition metal oxide in the form of secondary particles in which two or more single particles are aggregated, and represented by Formula of Li[Ni_{0.83}Co_{0.11}Mn_{0.06}]O₂ was prepared. The positive electrode active material had a BET specific surface area of 2.4 m²/g and an average particle diameter (D₅₀) of 8.0 µm.

A positive electrode was prepared in the same manner as in Example 2, except that the positive electrode active material prepared above was used.

**[Table 1]**

| | Positive electrode active material | | | | Linear conductive material | | Equation 1 | |
|---|---|---|---|---|---|---|---|---|
| | Single particle /Seconda ry particle | Aver age part icle diam eter (D₅₀) (µm) | Speci fic surfa ce area( m²/g) | amount (wt %, with respect to 100 wt% of positive electrod e active material layer) | Spe cif ic sur fac e are a (m² /g) | amount (wt %, with respect to 100 wt% of positive electrod e active material layer) | B/A value | Pas s/f ail |
| Example 1 | Single particle | 4.4 | 0.8 | 97 | 185 | 0.68 | 1.5 | O |
| Example 2 | Single particle | 4.4 | 0.8 | 97 | 185 | 1.47 | 3.5 | O |
| Example 3 | Single particle | 4.4 | 0.8 | 97 | 185 | 1. 68 | 4.7 | O |
| Example 4 | Single particle | 4.4 | 0.8 | 97 | 185 | 1.1 | 2.6 | O |
| Example 5 | Single particle | 4.4 | 0.8 | 97 | 185 | 0.75 | 1.8 | O |
| Comparative Example 1 | Single particle | 4.4 | 0.8 | 97 | 185 | 0.42 | 1.0 | X |
| Comparative Example 2 | Single particle | 4.4 | 0.8 | 97 | 185 | 1.89 | 5.0 | X |
| Comparative Example 3 | Single particle | 4.4 | 0.8 | 96.6 | - | - | - | X |
| Comparative Example 4 | Single particle | 1.5 | 1.8 | 97 | 185 | 1.47 | 1.6 | O |
| Comparative Example 5 | Single particle | 1.5 | 1.8 | 95 | 185 | 3 | 3.2 | O |
| Comparative Example 6 | Single particle | 12.0 | 0.6 | 97 | 185 | 1.47 | 4.7 | O |
| Comparative Example 7 | Single particle | 12.0 | 0.6 | 96 | 185 | 1 | 3.2 | O |
| Comparative Example 8 | Secondary particle | 8.0 | 2.4 | 97 | 185 | 1.47 | 1.6 | O |

### Experimental Example

### <Preparation of lithium secondary battery>

### 1. Preparation of negative electrode

Graphite as a negative electrode active material, carbon black as a conductive material, styrene-butadiene rubber (SBR) as a binder, and carboxymethylcellulose (CMC) as a thickener were mixed with water as a solvent in a weight ratio of 95.35:0.5:3:1.15 to prepare a negative electrode slurry, and the negative electrode slurry was then applied onto a copper collector, dried, and roll pressed to prepare a negative electrode.

### 2. Preparation of secondary battery

A porous polyethylene separator was interposed between the positive electrode and the negative electrode prepared in Examples 1 to 5 and Comparative Examples 1 to 8 to prepare an electrode assembly, and an electrolyte was injected into a battery case after the electrode assembly was placed inside the battery case to prepared half-cell lithium secondary batteries of Examples 1 to 5 and Comparative Examples 1 to 8. In this case, the electrolyte was prepared by dissolving lithium hexafluorophosphate (LiPF₆) at a concentration of 1.0 M in an organic solvent in which ethylene carbonate (EC), propylene carbonate (PC), and propylene propionate (PP) were mixed in a volume ratio of 4:4:2.

### Experimental Example 1: Evaluation of lifespan characteristics

Cycle capacity retention of the secondary batteries prepared in Examples 1 to 5 and Comparative Examples 1 to 8 was evaluated using an electrochemical charging/discharging device.

The cycle capacity retention was determined performing charging/discharging at 0.1 C for the 1st and 2nd cycles, and performing charging/discharging at 1.0 C from the 3rd cycle (charging conditions: CC/CV, 4.25 V/0.005 C cut-off, discharging conditions : CC, 3.0 V cut off).

The capacity retention rate was determined as follows. 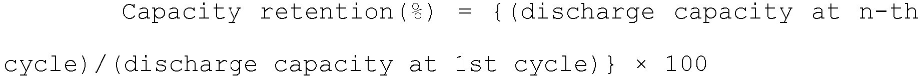 Capacity retention(%) = {(discharge capacity at n-th cycle)/(discharge capacity at 1st cycle)} × 100

(In this case, N is an integer of 1 or greater)

Capacity retention (%) of Examples 1 to 5 and Comparative Examples 1 to 8 at the 150th cycle is shown in Table 2 below.

### Experimental Example 2: Evaluation of rate characteristics

The lithium secondary batteries of Examples 1 to 5 and Comparative Examples 1 to 8 were charged at 25 °C in CC/CV mode at 0.1 C up to 4.25 V, and discharged in CC mode at 0.1 C up to 3.0 V to obtain discharge capacity at 0.1 C discharge.

Then, separate lithium secondary batteries of Examples 1 to 5 and Comparative Examples 1 to 8 were prepared, and the lithium secondary batteries were charged at 25 °C in CC/CV mode at 0.1 C up to 4.25 V, and discharged in CC mode at 0.1 C up to 3.0 V to obtain discharge capacity at 2.0 C discharge.

Thereafter, the rate characteristics were determined through the following equation and evaluated. In this case, excellent rate characteristics indicate that the rate of decrease in normalized capacity (i.e., capacity retention) according to an increase in discharge rate (C-rate) is small. The results thereof are presented in Table 2 below. 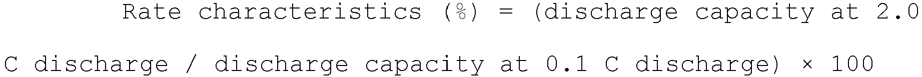 Rate characteristics (%) = (discharge capacity at 2.0 C discharge / discharge capacity at 0.1 C discharge) × 100

### Experimental Example 3: Evaluation of cell thickness increase rate

The secondary batteries prepared in Examples 1 to 5 and Comparative Examples 1 to 8 were charged and discharged for 150 cycles using an electrochemical charging/discharging instrument.

The cycle charging/discharging was performed at 0.1 C for the 1st and 2nd cycles, and at 1.0 C from the 3rd cycle (charging conditions: CC/CV, 4.25 V/0.005 C cut-off, discharging conditions : CC, 3.0 V cut off).

The rate of increase in cell thickness according to cycle charging/discharging was evaluated through the following equation. In the following equation, thickness of a secondary battery was determined using an 800 gf PPHG (plate thickness meter). The results thereof are presented in Table 2 below. 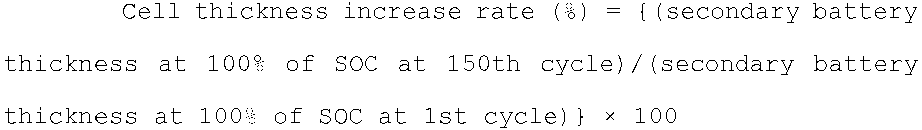 Cell thickness increase rate (%) = { (secondary battery thickness at 100% of SOC at 150th cycle)/(secondary battery thickness at 100% of SOC at 1st cycle)} × 100

**[Table 2]**

| | Experimental Example 1 | Experimental Example 2 | Experimental Example 3 |
|---|---|---|---|
| | Capacity retention(%) (@ 150^{th} cycle) | Rate characteristic( %) | Cell thickness increase rate (%) (@ 150^{th} cycle) |
| Example 1 | 92.0 | 96.9 | 3.8 |
| Example 2 | 95.9 | 97.4 | 4.2 |
| Example 3 | 94.8 | 97.3 | 4.1 |
| Example 4 | 87.6 | 92.4 | 4.3 |
| Example 5 | 84.3 | 91.0 | 4.5 |
| Comparative Example 1 | 92.2 | 93.4 | 6.4 |
| Comparative Example 2 | 86.4 | 91.5 | 12.4 |
| Comparative Example 3 | 83.2 | 90.1 | 16.4 |
| Comparative Example 4 | 72.4 | 93.4 | 15.2 |
| Comparative Example 5 | 66.2 | 85.2 | 33.8 |
| Comparative Example 6 | 79.8 | 58.4 | 5.2 |
| Comparative Example 7 | 73.3 | 42.6 | 8.6 |
| Comparative Example 8 | 77.2 | 89.8 | 24.5 |

Referring to Table 2, it is seen that the lithium secondary batteries of Examples 1 to 5 satisfying Equation 1 according to the present invention show a significantly improved level of capacity retention and rate characteristics, and low increase rate of cell thickness compared to Comparative Examples 1 to 3 failing to satisfy Equation 1.

Meanwhile, it is seen that Comparative Examples 4 to 7 using positive electrode active materials having an excessively small or large average particle diameter (D₅₀) and Comparative Example 8 using a positive electrode active material that is not in the form of a single particle fail to achieve the desired effect of improving capacity retention, improving rate characteristics, and reducing increase rate of cell thickness in the present invention.

## Claims

1. A positive electrode comprising:
a positive electrode current collector; and
a positive electrode active material layer disposed on at least one surface of the positive electrode current collector,
wherein the positive electrode active material layer comprises a positive electrode active material and a conductive material;
the conductive material consists of a linear conductive material;
the positive electrode active material comprises a lithium composite transition metal oxide containing nickel (Ni), cobalt (Co), and manganese (Mn);
the lithium composite transition metal oxide is in the form of a single particle;
the positive electrode active material has an average particle diameter (D₅₀) of 2 µm to 10 µm;
the positive electrode satisfies Equation 1 below: [Equation 1] $1.2 \leq B / A \leq 4.7$
wherein in Equation 1 above, A is the product of the BET specific surface area of the positive electrode active material and the percentage by weight of the positive electrode active material relative to the weight of the positive electrode active material layer, and B is the product of the BET specific surface area of the linear conductive material and the percentage by weight of the linear conductive material relative to the weight of the positive electrode active material layer;
the positive electrode active material has a BET specific surface area of 0.2 m²/g to 3 m²/g;
the positive electrode active material layer comprises the linear conductive material in an amount of 0.50 wt% to 1.75 wt%; and
the BET specific surface areas are determined using the method set out in the description.

2. The positive electrode of claim 1, wherein the positive electrode active material layer comprises the positive electrode active material in an amount of 90 wt% to 99 wt%.

3. The positive electrode of claim 1, wherein the linear conductive material is carbon nanotubes.

4. The positive electrode of claim 1, wherein the linear conductive material has a specific surface area of 150 m²/g to 300 m²/g.

5. The positive electrode of claim 1, wherein the linear conductive material has a pellet density of 0.09 g/cc to 0.16 g/cc.

6. The positive electrode of claim 1, wherein the BET specific surface area of the linear conductive material is 150 to 450 times the BET specific surface area of the positive electrode active material.

7. The positive electrode of claim 1, wherein the percentage by weight of the linear conductive material relative to the total weight of the positive electrode active material layer is 0.006 to 0.018 times the percentage by weight of the positive electrode active material relative to the total weight of the positive electrode active material layer.

8. The positive electrode of claim 1, wherein the positive electrode active material layer further comprises a binder.

9. The positive electrode of claim 8, wherein the positive electrode active material layer comprises the binder in a remaining amount excluding the positive electrode active material and the linear conductive material.

10. A secondary battery comprising:
the positive electrode according to claim 1;
a negative electrode facing the positive electrode;
a separator interposed between the positive electrode and the negative electrode; and
an electrolyte.

## Patentansprüche

1. Positive Elektrode, umfassend:
einen Stromkollektor für eine positive Elektrode und
eine Aktivmaterialschicht für eine positive Elektrode, die auf mindestens einer Oberfläche des Stromkollektors für eine positive Elektrode angeordnet ist,
wobei die Aktivmaterialschicht für eine positive Elektrode ein Aktivmaterial für eine positive Elektrode und ein leitfähiges Material umfasst,
das leitfähige Material aus einem linearen leitfähigen Material besteht,
das Aktivmaterial für eine positive Elektrode ein Lithiumkompositübergangsmetalloxid umfasst, das Nickel (Ni), Cobalt (Co) und Mangan (Mn) enthält,
das Lithiumkompositübergangsmetalloxid in Form eines Einzelpartikels vorliegt,
das Aktivmaterial für eine positive Elektrode einen durchschnittlichen Partikeldurchmesser (D₅₀) von 2 µm bis 10 µm aufweist,
die positive Elektrode die nachstehende Gleichung 1 erfüllt: [Gleichung 1] $1 , 2 \leq B / A \leq 4,7$
wobei in der obigen Gleichung 1 A das Produkt der spezifischen BET-Oberfläche des Aktivmaterials für eine positive Elektrode und des Gewichtsprozentanteils des Aktivmaterials für eine positive Elektrode, relativ zum Gewicht der Aktivmaterialschicht für eine positive Elektrode, ist und B das Produkt der spezifischen BET-Oberfläche des linearen leitfähigen Materials und des Gewichtsprozentanteils des linearen leitfähigen Materials, relativ zum Gewicht der Aktivmaterialschicht der positiven Elektrode, ist,
das Aktivmaterial für eine positive Elektrode eine spezifische BET-Oberfläche von 0,2 m²/g bis 3 m²/g aufweist,
die Aktivmaterialschicht für eine positive Elektrode das lineare leitfähige Material in einer Menge von 0,50 Gew.-% bis 1,75 Gew.-% umfasst und
die spezifischen BET-Oberflächen unter Verwendung des in der Beschreibung dargelegten Verfahrens bestimmt werden.

2. Positive Elektrode nach Anspruch 1, wobei die Aktivmaterialschicht für eine positive Elektrode das Aktivmaterial für eine positive Elektrode in einer Menge von 90 Gew.-% bis 99 Gew.-% umfasst.

3. Positive Elektrode nach Anspruch 1, wobei das lineare leitfähige Material Kohlenstoffnanoröhrchen ist.

4. Positive Elektrode nach Anspruch 1, wobei das lineare leitfähige Material eine spezifische Oberfläche von 150 m²/m bis 300 m²/g aufweist.

5. Positive Elektrode nach Anspruch 1, wobei das lineare leitfähige Material eine Pelletdichte von 0,09 g/cm³ bis 0,16 g/cm³ aufweist.

6. Positive Elektrode nach Anspruch 1, wobei die spezifische BET-Oberfläche des linearen leitfähigen Materials das 150- bis 450-fache der spezifischen BET-Oberfläche des aktiven Materials für eine positive Elektrode beträgt.

7. Positive Elektrode nach Anspruch 1, wobei der Gewichtsprozentanteil des linearen leitfähigen Materials, relativ zum Gesamtgewicht der Aktivmaterialschicht für eine positive Elektrode, das 0,006- bis 0,018-fache des Gewichtsprozentanteils des Aktivmaterials für eine positive Elektrode, relativ zum Gesamtgewicht der Aktivmaterialschicht für eine positive Elektrode, beträgt.

8. Positive Elektrode nach Anspruch 1, wobei die Aktivmaterialschicht für eine positive Elektrode ferner ein Bindemittel umfasst.

9. Positive Elektrode nach Anspruch 8, wobei die Aktivmaterialschicht für eine positive Elektrode das Bindemittel in einer Restmenge ausschließlich des Aktivmaterials für eine positive Elektrode und des linearen leitfähigen Materials umfasst.

10. Sekundärbatterie, umfassend:
die positive Elektrode gemäß Anspruch 1,
eine negative Elektrode, die der positiven Elektrode zugewandt ist,
einen Separator, der zwischen der positiven Elektrode und der negativen Elektrode eingefügt ist, und
einen Elektrolyten.

## Revendications

1. Électrode positive comprenant :
un collecteur de courant d'électrode positive ; et
une couche de matériau actif d'électrode positive disposée sur au moins une surface du collecteur de courant d'électrode positive,
dans laquelle la couche de matériau actif d'électrode positive comprend un matériau actif d'électrode positive et un matériau conducteur ;
le matériau conducteur consiste en un matériau conducteur linéaire ;
le matériau actif d'électrode positive comprend un oxyde composite de métal de transition au lithium contenant du nickel (Ni), du cobalt (Co), et du manganèse (Mn) ;
l'oxyde composite de métal de transition au lithium est sous la forme d'une particule unique ;
le matériau actif d'électrode positive présente un diamètre moyen de particule (D₅₀) de 2 µm à 10 µm ;
l'électrode positive satisfait à l'équation 1 ci-dessous : [Equation 1] $1 , 2 \leq B / A \leq 4,7$
dans laquelle, dans l'équation 1 ci-dessus, A est le produit de la surface spécifique BET du matériau actif d'électrode positive et du pourcentage en poids du matériau actif d'électrode positive par rapport au poids de la couche de matériau actif d'électrode positive, et B est le produit de la surface spécifique BET du matériau conducteur linéaire et du pourcentage en poids du matériau conducteur linéaire par rapport au poids de la couche de matériau actif d'électrode positive ;
le matériau actif d'électrode positive présente une surface spécifique BET de 0,2 m²/g à 3 m²/g ;
la couche de matériau actif d'électrode positive comprend le matériau conducteur linéaire en une quantité de 0,50 % en poids à 1,75 % en poids ; et
les surfaces spécifiques BET sont déterminées en utilisant la méthode exposée dans la description.

2. Électrode positive selon la revendication 1, dans laquelle la couche de matériau actif d'électrode positive comprend le matériau actif d'électrode positive en une quantité de 90 % en poids à 99 % en poids.

3. Électrode positive selon la revendication 1, dans laquelle le matériau conducteur linéaire est constitué de nanotubes de carbone.

4. Électrode positive selon la revendication 1, dans laquelle le matériau conducteur linéaire présente une surface spécifique de 150 m²/g à 300 m²/g.

5. Électrode positive selon la revendication 1, dans laquelle le matériau conducteur linéaire présente une densité de granulé de 0,09 g/cc à 0,16 g/cc.

6. Électrode positive selon la revendication 1, dans laquelle la surface spécifique BET du matériau conducteur linéaire est de 150 à 450 fois la surface spécifique BET du matériau actif d'électrode positive.

7. Électrode positive selon la revendication 1, dans laquelle le pourcentage en poids du matériau conducteur linéaire par rapport au poids total de la couche de matériau actif d'électrode positive est de 0,006 à 0,018 fois le pourcentage en poids du matériau actif d'électrode positive par rapport au poids total de la couche de matériau actif d'électrode positive.

8. Électrode positive selon la revendication 1, dans laquelle la couche de matériau actif d'électrode positive comprend en outre un liant.

9. Électrode positive selon la revendication 8, dans laquelle la couche de matériau actif d'électrode positive comprend le liant en une quantité restante à l'exclusion du matériau actif d'électrode positive et du matériau conducteur linéaire.

10. Batterie secondaire comprenant :
l'électrode positive selon la revendication 1 ;
une électrode négative faisant face à l'électrode positive ;
un séparateur interposé entre l'électrode positive et l'électrode négative ; et
un électrolyte.
